(19)

Europäisches
Patentamt
European
Patent Office
Office européen
des brevets

(11) **EP 4 601 250 A1**

(12) **EUROPEAN PATENT APPLICATION**

(43) Date of publication:
**13.08.2025 Bulletin 2025/33**

(21) Application number: **25152239.7**

(22) Date of filing: **16.01.2025**

(51) International Patent Classification (IPC):
**H04L 25/02** $^{(2006.01)}$

(52) Cooperative Patent Classification (CPC):
**H04L 25/0224; H04L 25/0228**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2024 GB 202401787**

(71) Applicant: **Nokia Technologies Oy
02610 Espoo (FI)**

(72) Inventors:
• **BARBU, Oana-Elena
  Aalborg (DK)**
• **KIILERICH PRATAS, Nuno Manuel
  Aalborg (DK)**
• **VEJLGAARD, Benny
  Gistrup (DK)**
• **HARREBEK, Johannes
  Aalborg (DK)**
• **SVENDSEN, Simon
  Aalborg (DK)**

(74) Representative: **Nokia EPO representatives
Nokia Technologies Oy
Karakaari 7
02610 Espoo (FI)**

(54) **TERMINAL DEVICE COMMUNICATION**

(57) A method, apparatus and computer program is described comprising: receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node; receiving one or more reference signals from the transmitting node; receiving an activation signal transmitted by the transmitting node to the terminal device; receiving a response signal, wherein the response signal includes a response generated at the terminal device in response to the activation signal transmitted by the transmitting node to the terminal device; and removing, based on an updated estimated channel response between the transmitting node and the receiving node at a time of transmitting the activation signal by the transmitting node to a terminal device an estimated contribution of the activation signal transmitted by the transmitting node to the terminal device from the response signal.

Fig. 9

## Description

**Field**

Example embodiments may relate to systems, methods and/or computer programs for communications with a terminal device, such as a ambient Internet of Things (AIOT) device.

**Background**

Arrangements for communication with terminal devices, such as AOIT devices, are known. There remains a need for further developments in this field.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus (e.g. a reader device of a mobile communication system) comprising: means for receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node; means for receiving one or more reference signals from the transmitting node; means for receiving, at the apparatus, an activation signal transmitted by the transmitting node to the terminal device; means for receiving a response signal, wherein the response signal includes a response generated at the terminal device in response to the activation signal transmitted by the transmitting node to the terminal device; and means for removing an estimated contribution of the activation signal transmitted by the transmitting node to the terminal device from the response signal, wherein the estimated contribution is generated based on a combination of channel information based on at least one of the received reference signals with the activation signal. The configuration information may further comprises a validity period for the transient propagation similarity information transient propagation. The transient propagation similarity information comprises transient quasi co-location information.

The apparatus may further comprise means for estimating a channel response between the transmitting node and the receiving node based on a selected one of the reference signals (e.g. based on a definition in an ordered list of quasi co-location (QCL) information); and means for modifying the estimated channel response to generate an updated estimated channel response at a time of transmitting the activation signal by the transmitting node to the terminal device, wherein said channel information is based on the updated estimated channel response. The apparatus may further comprise means for defining a filter function based on a quasi propagation similarity method, wherein the updated estimated channel response is estimated by applying said filter function to the estimated channel response.

Some example embodiments further comprise means for providing a terminal device detection outcome to the network node. The apparatus may further comprise means for receiving an updated transient propagation similarity information from the network node in response to said terminal device detection outcome.

The selected one of the reference signals may be defined by said transient propagation similarity information.

Some example embodiments further comprise means for determining the terminal device detection outcome.

According to a second aspect, there is described an apparatus comprising: means for receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node; means for transmitting said reference signals in accordance with the configuration information; means for transmitting an activation signal to the terminal device in accordance with the configuration information. The apparatus may be the said transmitting node (e.g. an activator node). The apparatus may comprise be a gNB or a UE. The configuration information may further comprises a validity period for the transient propagation similarity information transient propagation. The transient propagation similarity information comprises transient quasi co-location information.

According to a third aspect, there is described an apparatus (e.g. a network node of a mobile communication system) comprising: means for providing configuration information identifying a transmitting node and a receiving node for terminal device communication to said transmitting and receiving nodes, wherein the configuration information further comprises transient propagation similarity information providing an ordered list of reference signals for transmission from the transmitting node to the receiving node; and means for receiving a terminal device detection outcome from the receiving node. The configuration information may further comprises a validity period for the transient propagation similarity information transient propagation. The transient propagation similarity information comprises transient quasi co-location information.

Some example embodiments further comprise means for providing updated transient propagation similarity information to the receiving node in response to said terminal device detection outcome. The apparatus may further comprise means for generating said updated transient propagation similarity information by selectively reconfiguring or disabling the propagation similarity information.

According to a fourth aspect, there is provided a method comprising: receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node; receiving one or more reference signals from the transmitting node; receiving an activation signal transmitted by the transmitting node to the terminal device; receiving a response signal, wherein the response signal includes a response generated at the terminal device in response to the activation signal transmitted by the transmitting node to the terminal device; and removing an estimated contribution of the activation signal transmitted by the transmitting node to the terminal device from the response signal, wherein the estimated contribution is generated based on a combination of channel information based on at least one of the received reference signals with the activation signal. The configuration information may further comprises a validity period for the transient propagation similarity information transient propagation. The transient propagation similarity information comprises transient quasi co-location information.

The method may further comprise estimating a channel response between the transmitting node and the receiving node based on a selected one of the reference signals (e.g. based on a definition in an ordered list of quasi co-location (QCL) information); and modifying the estimated channel response to generate an updated estimated channel response at a time of transmitting the activation signal by the transmitting node to the terminal device, wherein said channel information is based on the updated estimated channel response. The method may further comprise defining a filter function based on a quasi propagation similarity method, wherein the updated estimated channel response is estimated by applying said filter function to the estimated channel response.

Some example embodiments further comprise providing a terminal device detection outcome to the network node. The method may further comprise receiving an updated transient propagation similarity information from the network node in response to said terminal device detection outcome.

The selected one of the reference signals may be defined by said transient propagation similarity information.

Some example embodiments further comprise determining the terminal device detection outcome.

According to a fifth aspect, there is described a method comprising: receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node; transmitting said reference signals in accordance with the configuration information; transmitting an activation signal to the terminal device in accordance with the configuration information. The configuration information may further comprises a validity period for the transient propagation similarity information transient propagation. The transient propagation similarity information comprises transient quasi co-location information.

According to a sixth aspect, there is described a method comprising: providing configuration information identifying a transmitting node and a receiving node for terminal device communication to said transmitting and receiving nodes, wherein the configuration information further comprises transient propagation similarity information providing an ordered list of reference signals for transmission from the transmitting node to the receiving node; and receiving a terminal device detection outcome from the receiving node. The configuration information may further comprises a validity period for the transient propagation similarity information transient propagation. The transient propagation similarity information comprises transient quasi co-location information. Some example embodiments further comprise providing updated transient propagation similarity information to the receiving node in response to said terminal device detection outcome. The method may further comprise generating said updated transient propagation similarity information by selectively reconfiguring or disabling the propagation similarity information.

According to a seventh aspect, there is provided a computer-readable instructions which, when executed by a computing apparatus, cause the computing apparatus to perform (at least) any method as described herein (including the methods of the fourth to sixth aspects described above).

According to an eighth aspect, there is provided a computer-readable medium (such as a non-transitory computer-readable medium) comprising program instructions stored thereon for performing (at least) any method as described herein (including the methods of the fourth to sixth aspects described above).

According to a ninth aspect, there is provided an apparatus comprising: at least one processor; and at least one memory including computer program code which, when executed by the at least one processor, causes the apparatus to perform (at least) any method as described herein (including the methods of the fourth to sixth aspects described above).

**Brief Description of the Drawings**

Example embodiments will now be described by way of non-limiting example, with reference to the accompanying drawings, in which:

FIG. 1 is a block diagram of a system in accordance with an example embodiment;
FIG. 2 is a message flow diagram in accordance with an example embodiment;
FIG. 3 to 6 are flow charts showing algorithms in accordance with example embodiments;
FIG. 7 is a block diagram of a system in accordance with an example embodiment;
FIG. 8 is a block diagram of a system in accordance with an example embodiment;
FIG. 9 is a flow chart showing an algorithm in accordance with an example embodiment;
FIG. 10 is a message flow diagram in accordance with an example embodiment;
FIG. 11 is a flow chart showing an algorithm in accordance with an example embodiment;
FIG. 12 is a flow chart showing an algorithm in accordance with an example embodiment;
FIG. 13 is a block diagram of a module in accordance with an example embodiment;
FIG. 14 is a block diagram of components of a system in accordance with an example embodiment; and
FIG. 15 shows an example of tangible media for storing computer-readable code which when run by a computer may perform methods according to example embodiments described above.

**Detailed Description**

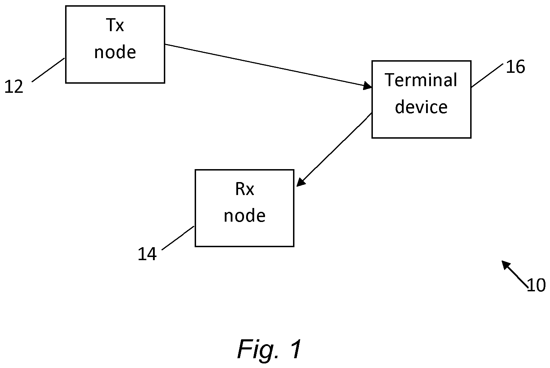

FIG. 1 is a block diagram of a system, indicated generally by the reference numeral 10, in accordance with an example embodiment.

The system 10 comprises a transmitting node 12, a receiving node 14, and a terminal device 16. The transmitting and receiving nodes may be nodes of a mobile communication system and may, for example, be a user equipment (UE), a base station, or a global node B (gNB) or similar node. As described in detail below, the transmitting node may also be able operate as a receiving node (e.g. receiving signals from a network node). Similarly, the receiving node may be able to operate as a transmitting node (e.g. transmitting signals to a network node). Nevertheless, from the viewpoint of the terminal device 16, the transmitting node 12 is transmitting signals and the receiving node 14 is receiving signals.

As indicated schematically in FIG. 1, the transmitting node 12 may transmit a radio signal to the terminal device 16. The terminal device 16 may modify that radio signal in some way and re-transmit the modified radio signal such that the re-transmitted signal can be detected by the receiving node 14. For example, the terminal device 16 may modify the transmitted signal using a backscattering procedure.

The terminal device 16 may be battery-less devices or devices with limited energy storage capabilities, and the energy can be provided by harvesting radio waves, visible light, other electromagnetic radiation, motion, etc. Such devices may be suitable for operation as part of an internet of things (IoT). In some examples, an internet of things device that relies in part on harvested ambient energy may be referred to as an ambient internet of things (AIOT). Ambient IoTs may be used in various industries, including logistics, manufacturing, transportation, energy, etc. In some example embodiments described below, the terminal device is an AIOT device that provide AIOT responses using backscattering. It should be noted that backscattering is no essential to all example embodiments.

Terminal devices (e.g. AIOT devices) capable of harvesting energy wirelessly and communicating wirelessly have advantages, for example in applications in which running wires and/or regularly replacing batteries is impractical. For example, in manufacturing or logistics, providing wired devices or devices having large batteries may be cost prohibitive if a large number of devices is to be used, or if articles to which the devices are to be affixed must be lightweight and/or portable. Moreover, if a device, such as a sensor, may be subjected to extreme environmental conditions, such as high pressure, extremely high/low temperatures, humidity, vibration, etc., then energy harvesting may be more practical than providing a wired connection or regularly replacing a battery.

Methods of communication by passive devices are provided. For example, as discussed in detail below, it is possible for some devices, upon receiving a suitable activation signal, to modulate data into the backscattering signal. The source of said activation signal may be the intended recipient of the data modulated into the backscattered signal, or the source may be some other device.

Devices capable of the aforementioned energy harvesting may, for example, be referred to as ambient internet of things devices (AIOT devices). Three types of AIOT devices have been proposed:

- Type A: No energy storage, no independent signal generation/amplification, i.e., backscattering transmission.
- Type B: Has energy storage, no independent signal generation, i.e., backscattering transmission. Use of stored energy can include amplification for reflected signals.
- Type C: Has energy storage, has independent signal generation, i.e., active RF components for transmission.

AIOT devices of types A and B typically cannot contact the network without receiving an activation signal, while AIOT device type C typically cannot contact the network if it has insufficient energy.

By way of example, power consumption targets for different types of AIOT device might, for example, be:

- Type A $\leq$ 1 $\mu$W or $\leq$ 10 $\mu$W
- Type A < Type B < Tpye C
- Type C $\leq$ 1mW to $\leq$ 10 mW

Similarly, device complexity targets for different types of AIOT device might, for example, be:

- Type A: Comparable to UHF RFID
- Type A $\leq$ Type B $\leq$ Type C
- Type C: Orders-of-magnitude lower than NB-IoT

Reading an AIOT or similar device (for example, reading an output of the terminal device 16 at the receiving node 14) can a challenging task due, for example, to the inherent nature of the AIOT radio. For example, the AIOT types A and B do not have an independent power source, are often mobile, and may only be able to hear other radio devices (such as the transmitting node 12) when physically close (e.g. within a 5-10 m radius) due to low complexity receiver. For these reasons, AIOT radio devices (often referred to as tags) typically cannot perform typical initial access procedures, e.g., paging response, random access, and neighbour cell monitoring procedures. Furthermore, introduction of new AIOT devices in the area, mobility of tags, data collection and transmission capability should be transparent to the relevant network. As a result of such limitations, a mobile communication network (e.g. a New Radio (NR) network NW) typically cannot apply the traditional NR UE paging operations.

In the system 10, the receiving node 14 may read the terminal device 16 (e.g. an AIOT device) if the terminal device receives an activation signal from the transmitting node with sufficient strength (e.g. sufficient strength to charge a terminal device of type A or type B) and the terminal device can generate a signal in response to the activation signal received from the transmitting node that is sufficient (e.g. powerful enough) to be detected at the receiving node 14.

Enabling the terminal device 16 to generate such as a signal can be difficult. For example:

- Multiple terminal devices (e.g. multiple AIOT devices) may respond on the same time-frequency resources, thus interfering with each other during their response. This type of interference is sometimes called tag-to-tag (TT) interference and it can affect the ability of the receiving node 14 to distinguish between AIOT devices which respond concurrently by using the same time-frequency resources.
- The terminal device 16 may respond/reflect on the same carrier as that used by the activation signal transmitted by the transmitting node 12. Since the physical area of an AIOT device is typically small, the power level of the reflected signal will typically be orders of magnitude lower than the activation signal itself and the phenomenon sometimes called activator-to-tag (AT) interference occurs. In other words, an AIOT response may be drowned by the activation signal and the reader must be able to isolate the activation signal before attempting to detect the tag.

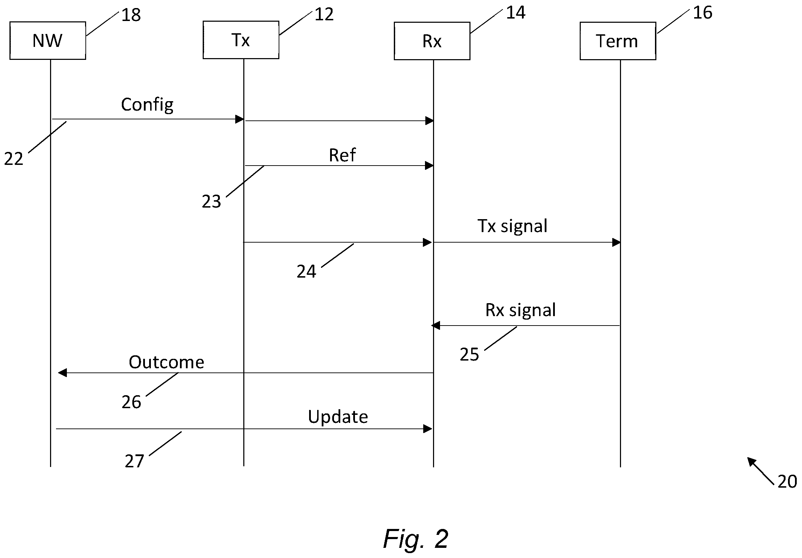

FIG. 2 is a message flow diagram, indicated generally by the reference numeral 20, in accordance with an example embodiment. The message flow sequence 20 shows example messages exchanged between the transmitting node 12, receiving node 14 and terminal device 16 of the system 10 described above, and a network node 18.

The terminal device 16 may be an AIOT device, as discussed above. The transmitting node 12 and the receiving node 16 may be an activator device and a reader device respectively for communication with the terminal device. The network node 18 may, for example, be a location management function (LMF), a serving gNB, or some other network node of a mobile communication system. As noted above, the transmitting node may also be able operate as a receiving node (e.g. receiving signals from a network node 18). Similarly, the receiving node may be able to operate as a transmitting node (e.g. transmitting signals to the network node 18). Nevertheless, from the viewpoint of the terminal device 16, the transmitting node 12 is transmitting signals and the receiving node 14 is receiving signals.

The message sequence 20 starts with the network node 18 providing configuration information (in message 22) to both the transmitting node 12 and the receiving node 14. The message 22 may provide configuration information identifying one or more of the transmitting node, the receiving node and the terminal device. The configuration information provided in the message 22 may comprise transient propagation similarity information (e.g. quasi co-location (QCL) information) providing an ordered list of reference signals for transmission from the transmitting node 12 to the receiving node 14, together with a validity period for the transient propagation similarity information.

The transmitting node 12 provides one or more reference signals (as message 23) that are received at the receiving node 14. The reference signal(s) may be used to estimate a channel between the transmitting node and the receiving node, as discussed in detail below.

The transmitting node 12 then sends a signal (message 24) to the terminal device 16. The message 24 is also received at the receiving node 14. The message 24 may be an activation signal for the terminal device (e.g. an activation signal for an AIOT device).

In response to the signal received in the message 24, the terminal device 16 transmits a response signal (message 25) that is received at the receiving node 14. The response signal 25 (e.g. an AIOT response) is sent in response to the signal transmitted in the message 24. For example, the message 26 may be generated at the terminal device by backscattering.

As discussed in detail below, the channel response between the transmitting node and the receiving node may be determined based on a selected one of the reference signals received in the message 23. That channel estimate may be modified to generate an updated estimated channel response between the transmitting node and the receiving node at a time of transmitting the message 24 - this may be relevant if nodes of the system 10 are moving, for example. The updated estimated channel response may then be used to remove an estimated contribution of the signal transmitted by the transmitting node to the terminal device (the message 24) from the total signal (the message 25) so that the response signal 25 (e.g. an AIOT response) can be isolated. The selected one of the reference signals used to determine the channel response may be defined by the configuration message 22.

In the context of the AIOT systems described above, the message sequence 20 can be used to enable a determination to be made at the receiving node 14 regarding the channel response of an activation channel in advance of an AIOT device reading session. A reading method can then be applied that uses the contribution of the transmitted activation signal (the message 24) to be removed (at least to a reasonable approximation) from the signal received at the receiving node 14 when the response signal 25 is provided by the terminal node 16. Thus, the AIOT response can be isolated from the activation signal.

In message 26, the network node 18 receives a terminal device detection outcome message 26 from the receiving node 14. As discussed further below, in response to the terminal device detection outcome 26, the network node may provide updated transient propagation similarity information to the receiving node 14 in an update message 27.

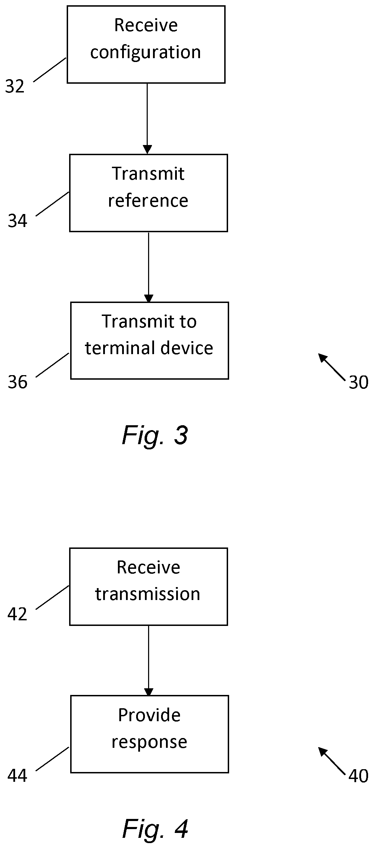

FIG. 3 is a flow chart showing an algorithm, indicated generally by the reference numeral 30, in accordance with an example embodiment. The algorithm 30 may, for example, be implemented at the transmitting node 12 (e.g. an activator device of an AIOT system).

The algorithm 30 starts at operation 32, where configuration information is received at a transmitting node (such as an activator device) from a network node of a mobile communication system. The configuration information identifies the transmitting node (e.g. an activator device) and a receiving node (e.g. a reader device) for communication with a terminal device (e.g. an AIOT device). As discussed in detail below, the configuration information may include transient propagation similarity information providing an ordered list of reference signals for transmission from the transmitter device to the receiver device and may include a validity period for the transient propagation similarity information.

At operation 34, one or more reference signals are transmitted (by the transmitting node) in accordance with the configuration information.

At operation 36, a signal (e.g. an activation signal) is transmitted in accordance with the configuration information.

FIG. 4 is a flow chart showing an algorithm, indicated generally by the reference numeral 40, in accordance with an example embodiment. The algorithm 40 may, for example, be implemented at the terminal device 16 (e.g. an AIOT device).

At operation 42, a transmission is received. The transmission may be an activator signal and may be the signal transmitted in the operation 36 described above.

At operation 44, a response to the transmission is provided. The response may, for example be provided using backscattering, although this is not essential to all example embodiments. For example, a response may be independently generated at the terminal device without requiring backscattering (e.g. if the terminal device includes energy storage, such as a battery).

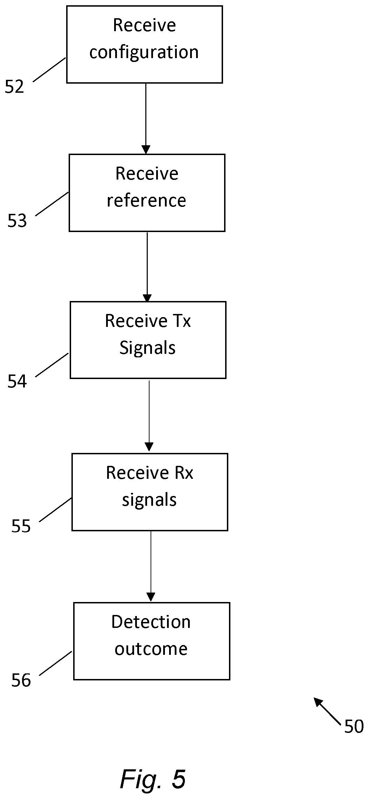

FIG. 5 is a flow chart showing an algorithm, indicated generally by the reference numeral 50, in accordance with an example embodiment. The algorithm 50 may, for example, be implemented at the receiving node 14 (e.g. a reader device of an AIOT system).

The algorithm 50 starts at operation 52, where configuration information is received at a receiving node (such as a reader device) from a network node of a mobile communication system. The configuration information identifies the receiving node and a transmitting node (e.g. an activator device) for communication with a terminal device (e.g. an AIOT device). As discussed in detail below, the configuration information may include transient propagation similarity information providing an ordered list of reference signals for transmission from the transmitter device to the receiver device and may include a validity period for the transient propagation similarity information.

At operation 53, one or more reference signals are received (from the transmitting node) in accordance with the configuration information.

At operation 54, a signal (e.g. an activation signal) as transmitted in accordance with the configuration information is received.

At operation 55, a signal is received from the terminal device. The signal received in the operation 55 may be processed, as discussed in detail below.

Finally, at operation 56, a detection outcome relating to the success of the algorithm 50 is determined. The outcome may be an AIOT device detection outcome. In some example embodiments, the configuration received in the operation 52 includes a request to provide an indication of an outcome of usage of the transient propagation similarity information. The detection outcome provided in the operation 56 may be provided in response to that request.

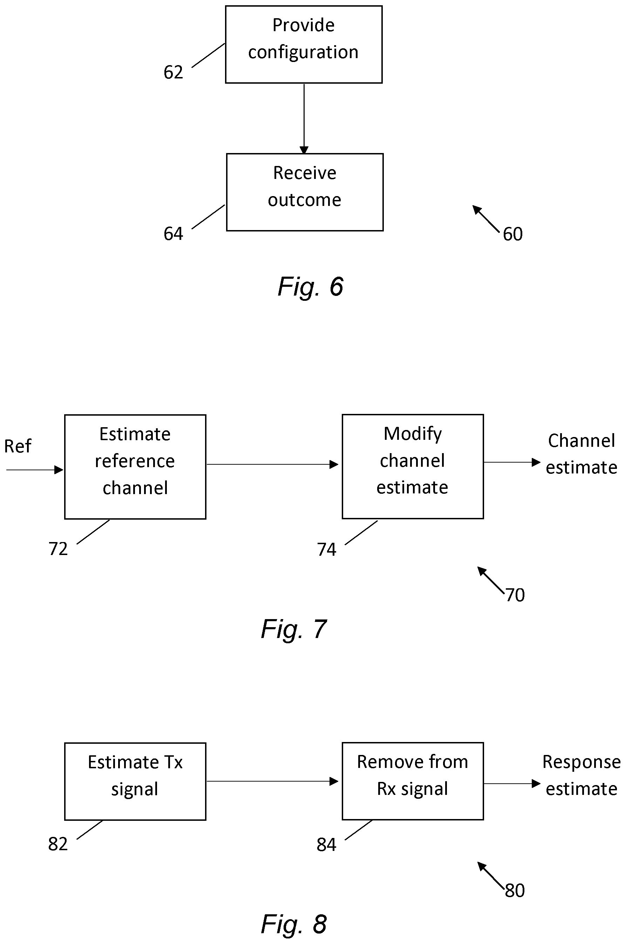

FIG. 6 is a flow chart showing an algorithm, indicated generally by the reference numeral 60, in accordance with an example embodiment. The algorithm 60 may, for example, be implemented at the network node 18 (e.g. a serving gNB or an LMF).

The algorithm 60 starts at operation 62, where configuration information is provided. The configuration information may be received at a transmitting node (see the operation 32 discussed above) and at a receiving node (see the operation 52 discussed above). The configuration information may identify a transmitter device and a reader device, as discussed above.

As discussed in detail below, the configuration information may include: a request to provide an indication of an outcome of usage of the transient propagation similarity information; and/or an indication of a time period between transmission of the reference signal and transmission of the activation signal.

At operation 64, an outcome (e.g. the decision outcome generated as operation 56) is received. The outcome may be an ambient IoT device detection outcome.

As discussed above, the transmitting node 12 may receive configuration information from the network node 18 that identifies the transmitting node 12 and the receiving node 14 for the terminal device 16. The transmitting node 12 transmits the signals in the messages 23 and 24 discussed above in accordance with the configuration information. As discussed in detail below, the configuration information may include transient propagation similarity information (e.g. quasi co-location (QCL) information) providing an ordered list of reference signals for transmission from the transmitting node to the receiving node, together with a validity period for the transient propagation similarity information.

The receiving node 14 therefore receives one or more reference signals from the transmitting node 12, receives a signal transmitted by the transmitting node to the terminal device, receives a response signal, including a response generated at the terminal device in response to the signal transmitted by the transmitting node to the terminal device.

As discussed in detail below, the receiving node 14 may receive configuration information from the network node 18, the configuration information identifying the transmitting node 12 and the receiving node 14 for communication with the terminal device 16. The receiving node 14 may provide a terminal device detection outcome to the network node.

In example embodiments discussed in detail below, a method is provided for predicting and removing activator-to-tag (AT) interference in AIOT systems (or similar systems) by using information about how similar the channels travelled by a terminal device (such as an AIOT device) are to other channels of other reference signals. Note that such similarity may represent itself in the form of same delay spread/Doppler spread, angle of arrival/departure, etc.

A signalling framework is proposed to associate an activation signal with one or more reference signals (either DL (with activator as gNB) and UL or SL (with activator as UE), or a previous activation signal), for example by defining:

- One or more transient AIOT quasi co-location (QCL)-types from an existing and/or enhanced list of quasi co-location (QCL) types and a hierarchy of how the different types may be applied or

  ○ a transient AIOT TCI state ID which specifies groups of QCL'ed signals and their respective types and
  ○ a time indication (or gap) between the different QCL signals. e.g., between the QCL'ed signal and the activation signal.

- The type of AIOT QCL transientness (such as how long is the validity period for the activation channel similarity with respect to the channels of the one or more QCL'ed signals).
- Corrective signals and actions to take when the QCL type expires early.

A receiving node (e.g. a reader device) can use the QCL association types to generate processes a received signal (e.g., compensating for RF RX imperfections) and combine it with the learned activation channel to suppress the activation signal in space and/or time and/or frequency domains.

FIG. 7 is a block diagram of a system, indicated generally by the reference numeral 70, in accordance with an example embodiment. The system 70 comprises a first module 72 for estimating a reference channel and a second module 74 for modifying the channel estimate generated by the first module.

The first module 72 receives the reference signal(s) transmitted by the transmitting node 12 (and received, for example, in the operation 53 described above). The first module 72 uses at least one of one or more received reference signals to generate a channel estimate for that channel.

Since the channel is likely to change over time (since various nodes of the system are mobile), the second module 74 uses the estimated channel response generated by the first module 72 to generate an updated estimated channel response between the transmitting node and the receiving node at a time of transmitting an activation signal by the transmitting node to a terminal device.

FIG. 8 is a block diagram of a system, indicated generally by the reference numeral 80, in accordance with an example embodiment. The system 80 comprises a first module 82 for estimating a contribution of the signal transmitted by the transmitting node to the terminal device (e.g. an AIOT device) to the signal received at the receiving node. The first module 82 may make use of the modified channel estimate generated by the second module 74 of the system 70 described above.

The second module 84 removes the estimated contribution of the activation signal transmitted by the transmitting node to the terminal device from the response signal. The output of the second module 84 is therefore an estimate of the response to the activation signal as provided by the terminal device.

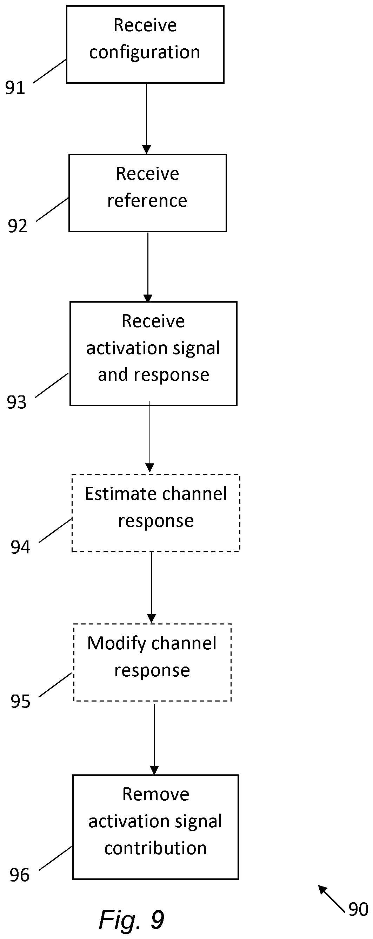

FIG. 9 is a flow chart showing an algorithm, indicated generally by the reference numeral 90, in accordance with an example embodiment. The algorithm 90 may be implemented by a receiving node (such as the receiving node 14 described above). The algorithm 90 has many similarities with the algorithm 50 described above.

The algorithm 90 starts at operation 91, where configuration information is received (at the receiving node) from a network node of a mobile communication system (such as the network node 18). The configuration information identifies a transmitting node (e.g. the transmitting node 12) and the receiving node for communication with a terminal device (e.g. the terminal device 16). The configuration information further comprises transient propagation similarity information providing an ordered list of reference signals for transmission from the transmitting node to the receiving node. The propagation similarity information is "transient" since the information may change (e.g. due to motion of one or more of the elements of the system).

At operation 92, one or more reference signals are received at the receiving node (e.g. a reader device) from the transmitting node (e.g. an activator device). The operations 91 and 92 are therefore similar to the operations 52 and 53 of the algorithm 50 described above.

At operation 93, an activation signal (as transmitted by the transmitting node to the terminal device) and a response (e.g. an AIOT response) to that activation signal (as generated at the terminal device in response to the activation signal transmitted by the transmitting node to the terminal device) are received at the receiving node.

At operation 94, a channel response between the transmitting node and the receiving node is estimated based on a selected one of the reference signals transmitted from the transmitting node to the receiving node in the operation 92. The reference signal(s) may be selected in accordance with transient propagation similarity information (e.g. quasi-QCL information), as discussed below. The operation 94 may, for example, be implemented by the first module 72 of the system 70 described above.

At operation 95, the channel response estimated in the operation 94 is modified to generate an updated estimated channel response between the transmitting node and the receiving node at a time of transmitting the activation signal by the transmitting node to a terminal device. The operation 95 may, for example, be implemented by the second module 74 of the system 70 described above.

At operation 96, an estimated contribution of the activation signal to the signal received in the operation 93 is removed based on a combination of channel information based at least one of reference signals received in operation 92 with the activation signal. For example, the operation 96 may include removing an estimated contribution of the activation signal to the signal received in the operation 93 based on the updated estimated channel response between the transmitting node and the receiving node at a time of transmitting the activation signal by the transmitting node to a terminal device (e.g. as generated in the operation 95). The operation 96 may, for example, be implemented by the system 80 described above.

It should be noted that in some example embodiments, the operations 94 and 95 may be omitted (e.g. the updated channel response may be generated elsewhere or in some other way, or the combination of the channel information and the activation signal may be generated in some other way).

As noted above, the propagation similarity information is "transient". The algorithm may include receiving an updated transient propagation similarity information from the network node in response to said terminal device detection outcome.

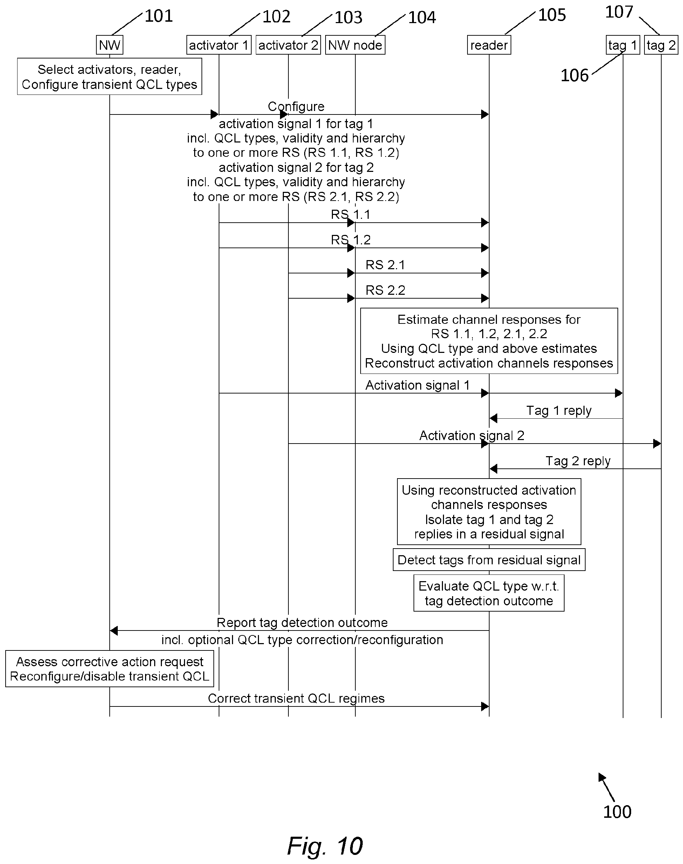

FIG. 10 is a message flow diagram, indicated generally by the reference numeral 100, in accordance with an example embodiment. The sequence 100 is an example implementation of the algorithm 90.

The message sequence 100 shows messages transferred between, and actions taken at, a network 101 (such as the network node 18), a first activator device 102 and a second activator device 103 (such as the transmitting node 12), a network node 104, a reader device 105 (such as the receiving node 14), and a first tag 106 and a second tag 107 (such as the terminal device 16). The tags shown in FIG. 10 may be AIOT devices. It should be noted that the number of each type of nodes shown in the message sequence 100 is provided by way of example only - different numbers of network nodes, activators, readers and tags/AIOT devices could be provided in other example embodiments.

To sequence 100 seeks to leverage activation signal transient quasi-collocation to other reference signals, enabling the reader device 105 to gain knowledge of the activation channel response in advance of the tag reading. This knowledge can be leveraged to isolate the tag signal from the activation signal at the reader side.

Note that the standard QCL-like framework described herein is transient due to the mobility regime of the signal source. In other words, the QCL is not static, and the QCL type may also change over time because of the moving source, by contrast to the standard QCL which is defined on a per fixed TRP level. Due to the above, the QCL type needs to be refined and/or corrected when it becomes deprecated, therefore a new interaction between the QCL user and the QCL source needs to be setup.

The message sequence 100 includes the following steps.

The network 101 (e.g., LMF, serving gNB) configures an activation signal transmission by the activator device 101 or 102 (where said device may be, for example, a UE or gNB). The configuration typically consists of at least the time, frequency, and code resources for the activation signal and in addition it may contain:

- An ordered list of transient AIOT QCL types (e.g. A/B/C/D/other, as discussed in detail below) to one or more reference signals which precedes the activation signal. For example, for FR1, if the activator device 102, 103 is a UE, then the activation signal may be QCL'ed type-A with UL SRS, SL RS (e.g., SL CSI-RS, UL DMRS), or with a previous activation signal targeting another tag. Alternatively, a TCI state may be configured which indicates at least a list of QCL types to one or more reference signals e.g., QCL type A with UL SRS, QCL type D with UL DMRS, etc. The ordering of the list indicates the order in which the QCLs should be applied when the activation signal is collocated with more than one other signal.

- A validity period for the QCL type. This is relevant since at least some of the nodes are mobile. This ensures that the QCL remains up to date and in accordance with the mobility profile of the activator radio. The validity period may be expressed in number of sampling frequencies starting with the time when said configuration is received. At the end of the validity period of the QCL type, the NR NW refreshes the QCL types.

- QCL usage outcome request. This is requested by the NW 101 to evaluate the correctness of the QCL type and/or of its validity period. In other words, the NW uses assistance from the reader device to refine the AIOT QCL definition.

- A time indication (or gap) between the different QCL signal e.g., between the start of the QCL'ed reference signal and the start of the activation.

The NR NW 101 sends the configuration of the activation signal including the above new QCL activation information to both the activator and reader devices. Depending on whether the activator/reader device are UEs or gNBs, the configuration may be realized via RRC IE/ MAC CE/LPP or via backhaul Xn/NRPPa interface respectively. Note that LPP/NRPPa may be used if the NR NW element is the LMF.

The activator device 101, 102 performs its Uu functions until the AIOT session starts (including the transmission of the reference signal(s) which are defined as QCL'ed with the future activation signal).

The reader device 105 monitors the QCL'ed reference signal(s) and estimates the RS channel response(s). Depending on the QCL type(s), the reader device constructs an approximation of the activation signal response using the estimated RS channel responses.

The activator device 102, 103 send the activation signal as configured.

The tag 106, 107 (e.g. AIOT devices) reflect the activation signal without amplification (for type B and A respectively), or actively generate an AIOT response (for tag type C).

The reader device 105 observes a received signal consisting of the activation signal contribution and the AIOT response. Using the learned channel response, the reader device applies a combination between the learned activation channel, the transmitted activation signal and the total received signal and isolates the residual signal which contains the AIOT response convolved with the tag channel response. The residual signal is then used to isolate the AIOT response.

The reader device reports the outcome of the tag detection back to the NR NW. The reader uses the detection outcome to also validate or conversely request correction of the AIOT QCL type.

The reader device 105 reports the QCL validation outcome to the NW 101 and may ask for corrections of the QCL type if the detection outcome is poor/negative. The reader device may report the QCL validation per pair of signals, or a per AIOT response basis.

The NW 101 assesses the QCL correction request and may redefine the QCL type for the signal pair or entire disable it no refinement is possible.

The corrective action is sent to the reader device. Such corrective action may consist of redefining the QCL type, and/or changing its validity period, and/or disabling the QCL altogether.

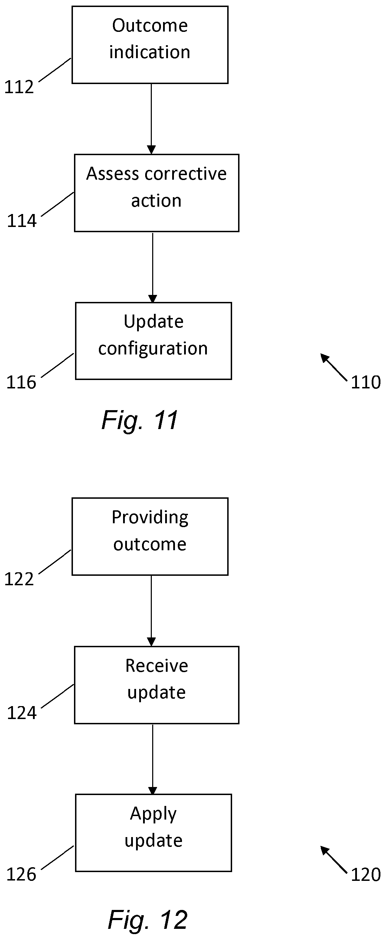

FIG. 11 is a flow chart showing an algorithm, indicated generally by the reference numeral 110, in accordance with an example embodiment. The algorithm 110 shows steps that may be implemented by a network node (such as the network nodes 18 and 101 described above).

The algorithm 110 starts at operation 112 where an indication of an outcome of usage of initial transient propagation similarity information is received from a receiving node (e.g. a reader device, as discussed above) of a mobile communication system. The outcome may be provided in response to a request to provide said indication of an outcome of usage of the initial transient propagation similarity information that may form part of the configuration information discussed above.

At operation 114, an assessment of whether correction action is required is made and, if correction action is required the transient propagation similarity information is updated accordingly.

At operation 116, the network node provides updated transient propagation similarity information to the receiving node in response to the outcome received in the operation 112.

The correction action may comprise at least one of: redefining the transient propagation similarity information; changing a validity period of the transient propagation similarity information; or disabling the transient propagation similarity information.

FIG. 12 is a flow chart showing an algorithm, indicated generally by the reference numeral 120, in accordance with an example embodiment. The algorithm 120 shows steps that may be implemented by a receiving node (e.g. a reader device).

The algorithm 120 starts at operation 122, where an indication of an outcome of usage of initial transient propagation similarity information is provided to a network node of a mobile communication system. The outcome may be that received in the operation 112 discussed above. As noted above, the outcome may be provided in response to a request to provide said indication of an outcome of usage of the initial transient propagation similarity information that may form part of the configuration information discussed above.

At operation 124, updated transient propagation similarity information is received from the network node in response to said terminal device detection outcome. The update may be that generated in the operation 116 discussed above. The updated transient propagation similarity information may comprise at least one of: redefined transient propagation similarity information; transient propagation similarity information having a different validity period; or the initial transient propagation similarity information being disabled.

At operation 126, the transient propagation similarity information is updated (at the receiving node) accordingly.

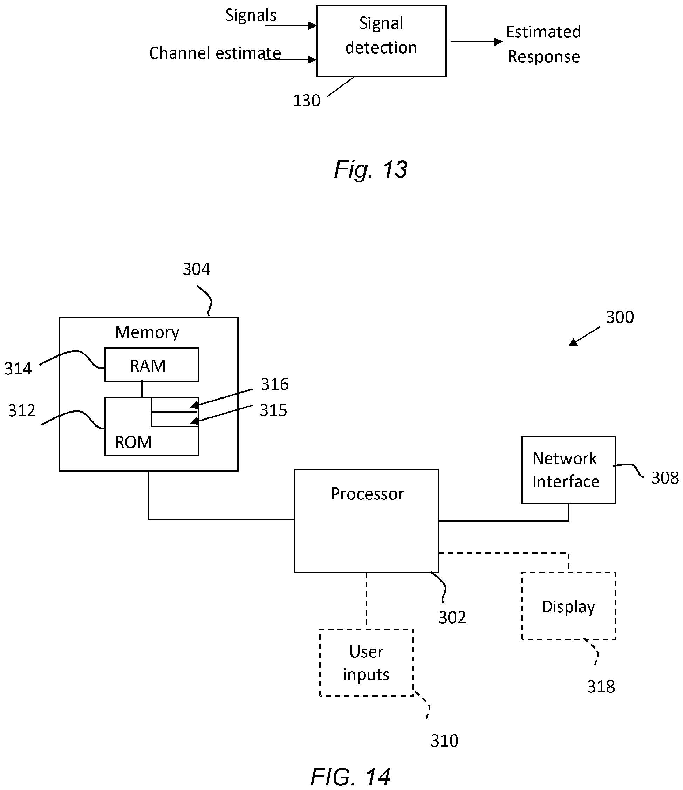

FIG. 13 is a block diagram of a module 130 in accordance with an example embodiment. The module 130 is a signal detection module that receives signals such as the activation and response signals discussed above with reference to the operation 93 and a channel estimate, such as the modified channel response discussed above with reference to the operation 95. The module 130 generates an estimated response by seeking to cancel out an activation signal, thereby implementing the operation 96 discussed above.

In some example embodiments, a filter function is defined based on a quasi propagation similarity method, wherein the updated estimated channel response is estimated by applying said filter function to the estimated channel response.

A number of embodiments are described below that could be used to implement the receiver module. These are dependent on the "type" of a transient propagation similarity information (e.g. a quasi QCL type).

*Embodiment 1 for 'typeA': {Doppler shift fD, Doppler spread dfD, average delay tm, delay spread dt}:*

When the activation signal a(t) is QCL'ed type-A with another reference signal s(t) (e.g. DMRS, CSI-RS, a past activation signal), this is indicative that the two channels have similar time and frequency selectivity, or in other words, that the correlation in time and frequency domain are approximately the same. In this case, the UE may apply the following procedure, called henceforth *Method-type-A:*

- Use the reference signal (RS) s(t) and estimate the response of the RS channel in time domain h(t) or frequency domain H(f).
- Use s(t) to estimate fD, dfD, tm, dt.
- Use (fD, dFD, tm, dt) and generate a 2D filter with response in time domain $g_{(fD,dFD,tm,dt)}(t)$ or frequency domain $G_{(fD,dFD,tm,dt)}(f)$. A typical choice for such filter may be a 2D Robust Wiener filter.
- Then, the UE may filter the RS channel response h(t) with the generated filter to obtain an approximate response of the activation channel in time or frequency domains:

$$v(t) = (g_{(fD,dFD,tm,dt)} * h)(t)$$

or

$$V(f) = G_{fD,dFD,tm,dt}(f) \cdot H(f)$$

*Embodiment 2 for 'typeB': {Doppler shift fD, Doppler spread dfD}:*

In case the activation signal a(t) is QCL'ed type-B with the RS s(t), then this is indicative that the two channels have similar frequency selectivity, or in other words, the velocity of the UE relative to the two signals sources is the same, and so is the spread of the taps of the two channels in angular domain. In this case, the UE may apply the following procedure, called henceforth *Method-type-B:*

- Use the RS s(t) and estimate the response of the RS channel in time domain h(t) or frequency domain H(f).
- Use s(t) to estimate fD, dfD.
- Use (fD, dFD) and generate a 1D filter with response in time domain $g_{(fD,dFD)}(t)$ or frequency domain $G_{(fD,dFD)}(f)$. A typical choice for such filter may be a 1D Robust Wiener filter.
- Then, the UE may filter the RS channel response h(t) with the generated filter to obtain an approximate response of the activation channel in time or frequency domains:

$$v(t) = (g_{(fD,dFD)} * h)(t)$$

or

$$V(f) = G_{fD,dFD}(f) \cdot H(f)$$

*Embodiment 3 for 'typeC': {Doppler shift fD, average delay tm}:*

In case the activation signal a(t) is QCL'ed type-B with the RS s(t), then this is indicative that the velocity of the UE relative to the two signals sources is the same, and similarly, that the average delay is approximately same.

In this case (method type C), the UE may approximate the delay spread of the activation signal dt to a conservative value e.g. corresponding to the CP duration.

Similarly, for the Doppler spread, the UE may consider a Uniform distribution of angle of arrivals of the dominant taps from all directions Unif$[0, 2\pi]$. This can be then used to compute the Doppler spread dfD e.g. as twice the Doppler shift fD. Then, the UE may proceed as in embodiment 1:

- Use the RS s(t) and estimate the response of the RS channel in time domain h(t) or frequency domain H(f).
- Use s(t) to estimate fD, dfD, tm, dt.
- Use (fD, dFD, tm, dt) and generate a 2D filter with response in time domain $g_{(fD,dFD,tm,dt)}(t)$ or frequency domain $G_{(fD,dFD,tm,dt)}(f)$. A typical choice for such filter may be a 2D Robust Wiener filter.
- Then, the UE may filter the RS channel response h(t) with the generated filter to obtain an approximate response of the activation channel in time or frequency domains:

$$v(t) = (g_{(fD,dFD,tm,dt)} * h)(t)$$

or

$$V(f) = G_{fD,dFD,tm,dt}(f) \cdot H(f)$$

*Embodiment 4 for 'typeD': {Spatial Rx parameter}:*

In case the activation signal a(t) is QCL'ed type-D with the RS s(t), then this is indicative that the two signals have the same direction of arrival. Hence, the UE may use the same RX combiner/beam to collect the signal a(t) as it used for s(t), and thus forego the alternative exhaustive beam search which would be needed to receive the activation signal. This is referred to as method type D.

*Embodiment 5:*

Once the activation channel (v(t), V(f)) has been reconstructed using one of the embodiments 1-4 above, the received activation signal may be reconstructed by time-domain convolution/frequency domain multiplication e.g., r(t) = (a * v)(t).

Once the received activation signal has been reconstructed, it can now be subtracted from the total received signal, and the residual signal used to detect the tag response.

*Embodiment 6 for multiple QCL pairs with multiple signals:*

In another embodiment, multiple QCL pairs may be indicated for the activation signal a (t). In this case, the reader may apply sequentially the methods described in the above embodiments.

For example, if the reader receives two QCL types e.g. A and B with two different signals, the reader may:

- Apply embodiment 1 (corresponding to QCL type A) and obtain a first approximation of the activation channel.
- Then, apply embodiment 2 (corresponding to QCL type B) and use the first approximation as initialization, and then compute a second approximation of the activation channel, etc.

*Embodiment 7 for multiple QCL pairs with the same signal:*

In another example, if the reader receives 2 QCL types e.g. A and D with the same signals, the reader may apply both embodiment 1 (corresponding to QCL typeA) and use the same RX beam (corresponding to QCL typeD) to obtain an approximate activation channel response.

For completeness, FIG. 14 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 20, 30, 40, 50, 60, 90, 100, 110 and 120 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size. In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

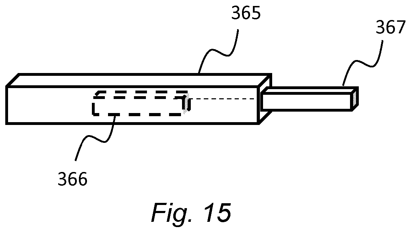

FIG. 15 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 2 to 6 and 9 to 12 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:

   means for receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node;
   means for receiving one or more reference signals from the transmitting node;
   means for receiving, at the apparatus, an activation signal transmitted by the transmitting node to the terminal device;
   means for receiving a response signal, wherein the response signal includes a response generated at the terminal device in response to the activation signal transmitted by the transmitting node to the terminal device; and
   means for removing an estimated contribution of the activation signal transmitted by the transmitting node to the terminal device from the response signal, wherein the estimated contribution is generated based on a combination of channel information based on at least one of the received reference signals with the activation signal.

2. An apparatus as claimed in claim 1, further comprising:

   means for estimating a channel response between the transmitting node and the receiving node based on a selected one of the reference signals; and
   means for modifying the estimated channel response to generate an updated estimated channel response at a time of transmitting the activation signal by the transmitting node to the terminal device, wherein said channel information is based on the updated estimated channel response.

3. An apparatus as claimed in claim 2, further comprising:
   means for defining a filter function based on a quasi propagation similarity method, wherein the updated estimated channel response is estimated by applying said filter function to the estimated channel response.

4. An apparatus as claimed in any one of claims 1 to 3, further comprising means for providing a terminal device detection outcome to the network node.

5. An apparatus as claimed in claim 4, further comprising means for receiving an updated transient propagation similarity information from the network node in response to said terminal device detection outcome.

6. An apparatus as claimed in any one of the preceding claims, wherein the selected one of the reference signals is defined by said transient propagation similarity information.

7. An apparatus as claimed in any one of the preceding claims, further comprising means for determining the terminal device detection outcome.

8. An apparatus comprising:

   means for receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node;
   means for transmitting said reference signals in accordance with the configuration information;
   means for transmitting an activation signal to the terminal device in accordance with the configuration information.

9. An apparatus comprising:

   means for providing configuration information identifying a transmitting node and a receiving node for terminal device communication to said transmitting and receiving nodes, wherein the configuration information further comprises transient propagation similarity information providing an ordered list of reference signals for transmission from the transmitting node to the receiving node; and
   means for receiving a terminal device detection outcome from the receiving node.

10. An apparatus as claimed in claim 9, further comprising means for providing updated transient propagation similarity information to the receiving node in response to said terminal device detection outcome.

11. An apparatus as claimed in claim 10, further comprising means for generating said updated transient propagation similarity information by selectively reconfiguring or disabling the propagation similarity information.

**12.** An apparatus as claimed in any one of the preceding claims, wherein the configuration information further comprises a validity period for the transient propagation similarity information transient propagation.

**13.** An apparatus as claimed in any one of the preceding claims, wherein the transient propagation similarity information comprises transient quasi co-location information.

**14.** A method comprising:

receiving configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node;
receiving one or more reference signals from the transmitting node;
receiving an activation signal transmitted by the transmitting node to the terminal device;
receiving a response signal, wherein the response signal includes a response generated at the terminal device in response to the activation signal transmitted by the transmitting node to the terminal device; and
removing an estimated contribution of the activation signal transmitted by the transmitting node to the terminal device from the response signal, wherein the estimated contribution is generated based on a combination of channel information based on at least one of the received reference signals with the activation signal.

**15.** A computer program comprising instructions which, when executed by an apparatus, cause the apparatus to perform at least the following:

receive configuration information from a network node of a mobile communication system, the configuration information identifying a transmitting node and a receiving node for communication with a terminal device, wherein the configuration information further comprises transient propagation similarity information providing an ordered list of reference signals for transmission from the transmitting node to the receiving node;
receive one or more reference signals from the transmitting node;
receive an activation signal transmitted by the transmitting node to the terminal device;
receive a response signal, wherein the response signal includes a response generated at the terminal device in response to the activation signal transmitted by the transmitting node to the terminal device; and
remove an estimated contribution of the activation signal transmitted by the transmitting node to the terminal device from the response signal, wherein the estimated contribution is generated based on a combination of channel information based on at least one of the received reference signals with the activation signal.

Tx
node

12

Terminal
device

16

Rx
node

14

10

*Fig. 1*

Fig. 2

```
          ┌──────────────────┐
          │     Receive      │
          │  configuration   │
   32 ─────│                  │
          └──────────────────┘
                   │
                   ▼
          ┌──────────────────┐
          │    Transmit      │
          │    reference     │
   34 ─────│                  │
          └──────────────────┘
                   │
                   ▼
          ┌──────────────────┐
          │   Transmit to    │
          │ terminal device  │     ↖
   36 ─────│                  │      30
          └──────────────────┘
```

*Fig. 3*

```
          ┌──────────────────┐
          │     Receive      │
          │   transmission   │
   42 ─────│                  │
          └──────────────────┘
                   │
                   ▼
          ┌──────────────────┐
          │     Provide      │
          │    response      │     ↖
   44 ─────│                  │      40
          └──────────────────┘
```

*Fig. 4*

Fig. 5

Provide
configuration

62

Receive
outcome

64

60

*Fig. 6*

Ref

Estimate
reference
channel

Modify
channel
estimate

Channel
estimate

72

74

70

*Fig. 7*

Estimate Tx
signal

Remove from
Rx signal

Response
estimate

82

84

80

*Fig. 8*

Fig. 9

101 102 103 104 105 107

NW | activator 1 | activator 2 | NW node | reader | tag 1 | tag 2

Select activators, reader,
Configure transient QCL types

106

Configure
activation signal 1 for tag 1
incl. QCL types, validity and hierarchy
to one or more RS (RS 1.1, RS 1.2)
activation signal 2 for tag 2
incl. QCL types, validity and hierarchy
to one or more RS (RS 2.1, RS 2.2)

RS 1.1

RS 1.2

RS 2.1

RS 2.2

Estimate channel responses for
RS 1.1, 1.2, 2.1, 2.2
Using QCL type and above estimates
Reconstruct activation channels responses

Activation signal 1

Tag 1 reply

Activation signal 2

Tag 2 reply

Using reconstructed activation
channels responses
Isolate tag 1 and tag 2
replies in a residual signal

Detect tags from residual signal

Evaluate QCL type w.r.t.
tag detection outcome

Report tag detection outcome
incl. optional QCL type correction/reconfiguration

Assess corrective action request
Reconfigure/disable transient QCL

Correct transient QCL regimes

100

*Fig. 10*

Outcome
indication

112

Assess corrective
action

114

Update
configuration

116

110

*Fig. 11*

Providing
outcome

122

Receive
update

124

Apply
update

126

120

*Fig. 12*

*Fig. 13*

*FIG. 14*

Fig. 15

Europäisches
Patentamt

European
Patent Office

Office européen
des brevets

# EUROPEAN SEARCH REPORT

**Application Number**

EP 25 15 2239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/262161 A1 (LI SHAOHUA [CN] ET AL) 8 September 2016 (2016-09-08) * paragraphs [0070], [0035] * ----- | 1-15 | INV. H04L25/02 |
| A | WO 2023/236028 A1 (QUALCOMM INC [US]; ELSHAFIE AHMED [US] ET AL.) 14 December 2023 (2023-12-14) * paragraph [0120] * ----- | 1,4, 7-10,14, 15 | |
| A | US 2019/182707 A1 (KIM EUNSUN [KR] ET AL) 13 June 2019 (2019-06-13) * the whole document * ----- | 1,8,9, 14,15 | |

**TECHNICAL FIELDS SEARCHED (IPC)**

H04L

The present search report has been drawn up for all claims

| Place of search | Date of completion of the search | Examiner |
|---|---|---|
| Munich | 21 February 2025 | Belloni, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 2239

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | Publication date | Patent family member(s) | | Publication date |
|---|---|---|---|---|
| US 2016262161 A1 | 08-09-2016 | EP | 3100385 A1 | 07-12-2016 |
| | | RU | 2638020 C1 | 11-12-2017 |
| | | US | 2016262161 A1 | 08-09-2016 |
| | | WO | 2015115991 A1 | 06-08-2015 |
| WO 2023236028 A1 | 14-12-2023 | NONE | | |
| US 2019182707 A1 | 13-06-2019 | CN | 105191174 A | 23-12-2015 |
| | | EP | 2981001 A1 | 03-02-2016 |
| | | JP | 6251292 B2 | 20-12-2017 |
| | | JP | 6470803 B2 | 13-02-2019 |
| | | JP | 2016509430 A | 24-03-2016 |
| | | JP | 2018014732 A | 25-01-2018 |
| | | KR | 20150135210 A | 02-12-2015 |
| | | US | 2016021565 A1 | 21-01-2016 |
| | | US | 2019182707 A1 | 13-06-2019 |
| | | WO | 2014157786 A1 | 02-10-2014 |

EPO FORM P0459

For more details about this annex : see Official Journal of the European Patent Office, No. 12/82